# EUROPÄISCHE PATENTSCHRIFT

(11) **EP 3 132 384 B1**
(45) Veröffentlichungstag und Bekanntmachung des Hinweises auf die Patenterteilung: **02.06.2021**
(21) Anmeldenummer: 15734306.2
(22) Anmeldetag: 17.04.2015
(51) Int. Cl.: G06K 17/00, G06K 19/06, G06K 7/10

(54) **BEREITSTELLUNG VON DATEN ZU EINER ANLAGE**
THE PROVISION OF SYSTEM-SPECIFIC DATA
FOURNITURE DE DONNÉES À UNE INSTALLATION

(30) Priorität: 17.04.2014 DE 102014207406
(43) Veröffentlichungstag der Anmeldung: 22.02.2017
(73) Patentinhaber: KSB SE & Co. KGaA, 67227 Frankenthal (DE)
(72) Erfinder: HUSS, Dominique, 67227 Frankenthal (DE)
(86) Internationale Anmeldenummer: PCT/EP2015/058452
(87) Internationale Veröffentlichungsnummer: WO 2015/158920

(56) Entgegenhaltungen:
- JP-A- 2011 074 638

## Beschreibung

Die Erfindung betrifft ein Verfahren zur Bereitstellung von Daten zu einer Anlage, bei der es sich um eine Kreiselpumpenanordnung handelt

Für den Betreiber von Anlagen ist es beispielsweise im Fall einer Störung oft erforderlich Informationen vom Hersteller zu erhalten und/oder Daten an den Hersteller zu übermitteln. Dazu haben viele Anlagenhersteller Serviceabteilungen eingerichtet, welche die benötigten Informationen zur Verfügung stellen oder Wartungsarbeiten durchführen bzw. koordinieren. Damit der Hersteller die passenden Informationen bereitstellen bzw. die notwendigen Wartungsarbeiten einleiten kann, benötigt er vom Betreiber der Anlage spezifische Daten.

Daher ist es seit vielen Jahrzehnten üblich, dass auf Typenschildern von Anlagen bzw. auf einzelnen Anlagenteilen Seriennummern oder andere anlagentypische Informationen angegeben sind, die bei einer Störungsmeldung an den Hersteller übermittelt werden.

Darüber hinaus verfügen zahlreiche Anlagen über ein Display, auf dem Anlagenspezifikationen angegeben sind und auch Fehlercodes angezeigt werden. Durch Übermittlung dieser Daten an den Service kann dieser angemessen reagieren.

In der DE 199 55 685 A1 wird ein elektronisches Identifikationselement beschrieben, das an einem Bauteil für strömungsführende Systeme angeordnet ist. In einem Speicher des elektronischen Identifikationselements sind Daten des jeweiligen Bauteiles in elektronischer Form enthalten. Mit einem Lese-/Schreibgerät erfolgt ein Zugriff auf die Daten.

Die JP 2001 074638 A zeigt einen Bagger mit einem innerhalb der Fahrzeugkabine angeordneten Display zur Anzeige von Bilddaten.

Aufgabe der Erfindung ist es, ein Verfahren zur Verfügung zu stellen, mit dem der Betreiber schnell und zuverlässig Daten einer Anlage, bei der es sich um eine Kreiselpumpenanordnung handelt prozesssicher übermitteln kann und/oder Informationen zu der Kreiselpumpenanordnung erhalten kann.

Diese Aufgabe wird erfindungsgemäß mit einem Verfahren nach Anspruch 1 und einer Kreiselpumpenanordnung nach Anspruch 10 gelöst.

Vorzugsweise handelt es sich bei der Einheit um eine Überwachungs-, Steuer- und/oder Regeleinrichtung, nachfolgend auch vereinfachend Steuer-/Regeleinheit genannt, beispielsweise eine speicherprogrammierbare Steuerung (SPS). Ergänzend oder alternativ kann ein Mikroprozessor basiertes Überwachungs-, Steuer- und/oder Regelgerät eingesetzt werden.

Der optoelektronische Code kann aus verschieden breiten Strichen und/oder Punkten und dazwischen liegenden Lücken mit möglichst hohem Kontrast, vorzugweise schwarz/weiß, bestehen. Ergänzend oder alternativ kann der Code, helle und dunkle Formen, beispielsweise Quadrate umfassen.

Der optoelektronisch lesbare Code wird auf einem Display der Anlage angezeigt. Somit handelt es sich nicht um ein starres Typenschild sondern um eine variable Bildschirmdarstellung.

Der auf dem Display der Anlage angezeigte optoelektronisch lesbare Code wird mit einem mobilen Gerät erfasst. Bei dem mobilen Gerät kann es sich um einen Lesestift oder einen Scanner handeln. Bei einer besonders günstigen Variante des Verfahrens kommt ein Gerät mit einer integrierten Kamera zum Einsatz, beispielsweise ein Mobiltelefon.

Das mobile Gerät überträgt Daten des Codes an einen Empfänger. Dazu kann das mobile Gerät mit einer Software zur Decodierung des optoelektronisch lesbaren Codes ausgestattet sein. Empfänger der Daten kann eine Serviceabteilung des Herstellers sein. Die Daten können in Form einer SMS übertragen werden und/oder es kann ein Zugang zu einem vom Hersteller bereitgestellten, proprietären Servicesystem ermöglicht werden.

Alternativ oder ergänzend kann durch Erfassung des optoelektronisch lesbaren Codes das mobile Gerät mit einem Netzwerk verbunden werden. Empfänger kann in diesem Fall ein Server sein, über den eine Verbindung zwischen dem mobilen Gerät und dem Netzwerk hergestellt wird. Bei dem Netzwerk kann es sich um das Internet und/oder um ein Intranet des Herstellers handeln. In der Regel umfasst das Netzwerk eine Vielzahl an Rechnern, die miteinander verbunden sind. Über eine Schnittstelle erfolgt die Übertragung der Daten zwischen dem Rechnernetzwerk und dem mobilen Gerät.

Bei einer besonders vorteilhaften Ausführung der Erfindung erzeugt die Einheit einen zweidimensionalen Code, insbesondere einen Matrix-Code. Dabei werden die Daten in Form einer Fläche über zwei Dimensionen codiert. Dieser hat sich bei der Bereitstellung von Informationen zu einer Anlage als besonders vorteilhaft erwiesen, da eine höhere Dichte an Informationen pro Fläche untergebracht wird. Ein Matrix-Code bietet zudem den Vorteil, dass die Ausrichtung des Codes auf dem Bildschirm keine Rolle spielt, da seine optische Erfassung omnidirektional möglich ist.

Als besonders günstig hat sich eine Displayanzeige mit einem Code erwiesen, der Erkennungsmerkmale zu seiner räumlichen Orientierung aufweist. Vorzugsweise wird dazu ein QR-Code auf dem Display der Anlage angezeigt, der in drei der vier Ecken eine spezielle Markierung aufweist, die eine Orientierung vorgibt. Durch diese Markierung zur Orientierung muss das mobile Gerät nicht zwingend in einer bestimmten Position zu dem Code ausgerichtet sein. Dies eröffnet dem Benutzer zusätzliche Freiheiten und ermöglicht eine schnelle und präzise Übertragung von Daten mit einer geringen Fehlerquote. Durch die erfindungsgemäße Bildschirmanzeige kann der Verlust eines Teils des Codes bei der Erfassung mit dem mobilen Gerät toleriert werden. Durch eine spezielle Fehlerkorrektur wird eine Rekonstruktion beschädigter Daten ermöglicht.

Bei einer besonders vorteilhaften Ausführung der Erfindung weist der Code Daten zu Fehlermeldungen der Anlage auf. Bei herkömmlichen Verfahren werden Fehlermeldungen in Form von Zahlen bzw. Buchstabencodes auf dem Display der Anlage angezeigt, die dann telefonisch übermittelt werden. Bei dem erfindungsgemäßen Verfahren werden Fehlermeldungen in einen optoelektronisch lesbaren Code umgewandelt, der von einem mobilen Gerät erfasst und übertragen wird. Dadurch werden Fehlerquellen bei der Übertragung deutlich reduziert. Zudem kann eine große Datenmenge innerhalb kurzer Zeit an die Servicestelle übermittelt werden.

Alternativ oder ergänzend kann der Code Daten zum Standort der Anlage aufweisen. Auch können spezifische Kenndaten zu der Anlage übertragen werden.

Im Gegensatz zu herkömmlichen Verfahren wird ein variabler Code erzeugt. Je nach Fehlermeldung ändert sich der Code. Die Steuer-/Regeleinheit erzeugt optoelektronisch lesbaren Codes in Abhängigkeit von Betriebsparametern der Anlage.

Erfindungsgemäß handelt es sich bei der Anlage um eine Kreiselpumpenanordnung.

Mittels einer Einheit werden Signale der Anlage erfasst. Dabei handelt es sich um Prozesssignale, insbesondere um Signale von Sensoren und/oder Aktoren. Die Einheit zur Steuer- und/oder Regelung der Anlage weist ein Display auf. Die Einheit ist dazu eingerichtet ist, Daten der Anlage als optoelektronisch lesbaren Code zur Anzeige auf dem Display der Einheit zu erzeugen.

Erfindungsgemäß können sowohl optoelektronische Codes mit statischen als auch mit prozessdynamischen Daten generiert werden. Somit können dynamische Prozessdaten, die sich während des Betriebs der Anlage in Abhängigkeit der Zeit ändern, wie Druck, Temperatur oder dergleichen als optoelektronischer Code zur Anzeige auf dem Display der Einheit erzeugt werden. Bei einer Kreiselpumpenanordnung können so Saugdruck, Enddruck und/oder Durchfluss bzw. andere Betriebsparameter der Kreiselpumpe zur Anzeige auf dem Display der Einheit gebracht werden. Neben den einzeln mittels optoelektronischen Codes erzeugten und angezeigten Prozessdaten ist es erfindungsgemäß ebenso ermöglicht, mittels optoelektronischer Codes verschiedene Betriebszustände der Anlage anzuzeigen. Dazu zählt die Information über einen bestimmten Betriebsbereich der Anlage innerhalb eines Kennfeldes. Dies kann beispielsweise bei einer Pumpenanlage, insbesondere bei einer Kreiselpumpenanordnung, mit einer erfindungsgemäßen Einheit zur Pumpenüberwachung die Information über einen bestimmten Betriebspunktbereich innerhalb eines Pumpenkennfeldes, insbesondere Kreiselpumpenkennfeldes, sein.

Betriebsparameter der Anlage können von der Einheit über Sensoren erfasst werden.

Sind Grenzwerte überschritten, kann es zu einer Alarm- und/oder Fehlermeldung kommen. Die Einheit erzeugt dann eine Bildschirmanzeige eines optoelektronischen Codes, der Daten zu dieser spezifischen Fehlermeldung enthält.

Somit wird bei dem erfindungsgemäßen Verfahren über die Steuer-/Regeleinheit eine Verknüpfung zwischen dem Signalaustausch der Einheit mit Sensoren und/oder Aktoren der Anlage und der Erzeugung eines optoelektronisch lesbaren Codes auf einem Display hergestellt. Die Einheit ist dazu eingerichtet, Daten von Sensoren und/oder Aktoren der Anlage zu erfassen und gleichzeitig aufgrund dieser Daten einen optoelektronisch lesbaren Code auf dem Display der Anlage zu erzeugen.

Weitere Merkmale und Vorteile der Erfindung ergeben sich aus der Beschreibung eines Ausführungsbeispiels anhand einer Zeichnung und aus der Zeichnung selbst.

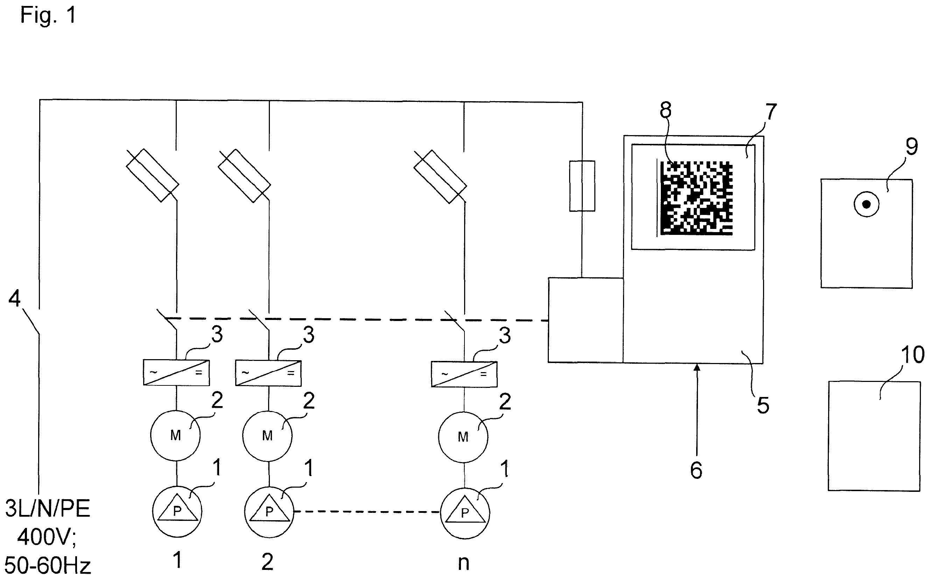

Im Ausführungsbeispiel gemäß Fig. 1 ist diese als Druckerhöhungsanlage ausgeführt, die mehrere (n) Pumpen 1 umfasst. Die Pumpen 1 sind in diesem Ausführungsbeispiel als Kreiselpumpen ausgeführt. Jede Pumpe 1 wird von einem Motor 2 angetrieben. Jeder Motor 2 steht mit einem Frequenzumrichter 3 in Verbindung.

Die Druckerhöhunganlage verfügt über einen Hauptschalter 4. Eine Einheit 5 erfasst die Signale von Sensoren 6 der Anlage. Weiterhin steht die Einheit 5 mit Aktoren der Anlage in Verbindung. Bei der Einheit 5 handelt es sich im Ausführungsbeispiel um eine Steuerung, die ein Steuergerät umfasst. Das Steuergerät besteht aus elektrischen und elektronischen Komponenten, die so verschaltet sind, dass sie die komplexen Steuervorgänge automatisch ausführen können.

Die Einheit 5 weist ein Display 7 auf. Erfindungsgemäß ist die Einheit 5 dazu eingerichtet, einen optoelektronisch lesbaren Code 8 zu erzeugen und auf dem Display 7 der Anlage anzuzeigen. In der Fig. 1 ist der optoelektronisch lesbare Code 8 rein schematisch dargestellt. Es handelt sich dabei um einen zweidimensionalen Code der Erkennungsmerkmale zu seiner Orientierung aufweist. Dazu wird ein QR-Code von der Einheit 5 erzeugt und auf dem Display 7 angezeigt.

Im Ausführungsbeispiel handelt es sich um einen variablen optoelektronisch lesbaren Code. Dieser ändert sich je nach Art der Fehlermeldung. Somit zeigt das Display 7 in Abhängigkeit von Betriebsparametern der Anlage variable optoelektronisch lesbare Codes an.

Der Code 8 wird von einem mobilen Gerät 9 erfasst. Dazu weist das mobile Gerät 9 eine Kamera auf. Der Code 8 wird in dem mobilen Gerät 9 von einer Software decodiert. Die decodierten Daten werden drahtlos an einen Empfänger 10 übermittelt. Bei dem Empfänger 10 kann es sich um ein weiteres mobiles Gerät, um einen Rechner, einen Server, ein Netzwerk von Rechnern usw. handeln.

Die Daten, die in dem Code verschlüsselt sind, können beispielsweise an den Service des Herstellers der Anlage per SMS übermittelt werden und/oder es kann ein GSM-Link des Serviceanbieters bereitgestellt werden. Der Service erhält einen umfassenden Überblick über die Situation, da er durch Entschlüsselung des Codes über Informationen zum Standort der Anlage, zu der Art der Fehlermeldung bzw. über allgemeine Kenndaten der Anlage verfügt.

Ergänzend oder alternativ kann der Betreiber über das mobile Gerät direkt auf die Webseite des Herstellers umgeleitet werden. Auf der Webseite kann dann zum Beispiel eine Liste an häufig gestellten Fragen (FAQ) aufgeführt sein, die dem Betreiber der Anlage schnell Support für sein Problem liefern.

## Patentansprüche

1. Verfahren zur Bereitstellung von Daten zu einer Kreiselpumpenanordnung mit folgenden Schritten:
- Erzeugung eines optoelektronisch lesbaren Codes (8) von einer Einheit (5) der Kreiselpumpenanordnung,
- Anzeigen des Codes (8) auf einem Display (7) der Kreiselpumpenanordnung,
- optische Erfassung des angezeigten Codes (8) mit einem mobilen Gerät (9),
- drahtlose Übertragung von Daten des Codes (8) von dem mobilen Gerät (9) an einen Empfänger (10).

2. Verfahren nach Anspruch 1, **dadurch gekennzeichnet, dass** die Einheit (5) einen zweidimensionalen Code (8) erzeugt.

3. Verfahren nach Anspruch 1 oder 2, **dadurch gekennzeichnet, dass** die Einheit (5) einen Matrix-Code erzeugt.

4. Verfahren nach einem der Ansprüche 1, 2 oder 3, **dadurch gekennzeichnet, dass** der Code (8) Erkennungsmerkmale zu seiner räumlichen Ausrichtung aufweist.

5. Verfahren nach einem der Ansprüche 1 bis 4, **dadurch gekennzeichnet, dass** der Code (8) Daten zu Fehlermeldungen der Kreiselpumpenanordnung aufweist.

6. Verfahren nach einem der Ansprüche 1 bis 5, **dadurch gekennzeichnet, dass** der Code (8) Daten zum Standort der Kreiselpumpenanordnung aufweist.

7. Verfahren nach einem der Ansprüche 1 bis 6, **dadurch gekennzeichnet, dass** der Code (8) Kenndaten der Kreiselpumpenanordnung aufweist.

8. Verfahren nach einem der Ansprüche 1 bis 7, **dadurch gekennzeichnet, dass** das mobile Gerät (9) und/oder der Empfänger (10) mit einem Netzwerk von Rechnern in Verbindung stehen.

9. Verfahren nach einem der Ansprüche 1 bis 8, **dadurch gekennzeichnet, dass** die Einheit (5) in Abhängigkeit von Parametern der Kreiselpumpenanordnung einen variablen Code (8) erzeugt.

10. Kreiselpumpenanordnung zur Durchführung eines Verfahrens nach einem der Ansprüche 1 bis 9 umfassend Sensoren (6) und/oder Aktoren, die mit einer Einheit (5) in Verbindung stehen, wobei die Kreiselpumpenanordnung ein Display (7) aufweist, das Daten der Einheit (5) anzeigt, **dadurch gekennzeichnet, dass** die Einheit (5) dazu eingerichtet ist, Daten der Kreiselpumpenanordnung als optoelektronisch lesbaren Code (8) zur Anzeige auf dem Display (7) zu erzeugen.

## Claims

1. Method for providing data regarding a centrifugal pump arrangement, having the following steps:
- a unit (5) of the centrifugal pump arrangement generating an optoelectronically readable code (8),
- displaying the code (8) on a display (7) of the centrifugal pump arrangement,
- optically capturing the displayed code (8) using a mobile device (9),
- wirelessly transmitting data in the code (8) from the mobile device (9) to a receiver (10).

2. Method according to Claim 1, **characterized in that** the unit (5) generates a two-dimensional code (8).

3. Method according to Claim 1 or 2, **characterized in that** the unit (5) generates a matrix code.

4. Method according to one of Claims 1, 2 or 3, **characterized in that** the code (8) contains identifying features regarding its spatial orientation.

5. Method according to one of Claims 1 to 4, **characterized in that** the code (8) contains data regarding fault messages for the centrifugal pump arrangement.

6. Method according to one of Claims 1 to 5, **characterized in that** the code (8) contains data regarding the location of the centrifugal pump arrangement.

7. Method according to one of Claims 1 to 6, **characterized in that** the code (8) contains characteristic data of the centrifugal pump arrangement.

8. Method according to one of Claims 1 to 7, **characterized in that** the mobile device (9) and/or the receiver (10) are connected to a network of computers.

9. Method according to one of Claims 1 to 8, **characterized in that** the unit (5) generates a variable code (8) on the basis of parameters of the centrifugal pump arrangement.

10. Centrifugal pump arrangement for performing a method according to one of Claims 1 to 9, comprising sensors (6) and/or actuators that are connected to a unit (5), wherein the centrifugal pump arrangement has a display (7) that displays data from the unit (5), **characterized in that** the unit (5) is designed to generate data for the centrifugal pump arrangement in the form of an optoelectronically readable code (8) to be displayed on the display (7).

## Revendications

1. Procédé de fourniture de données à un agencement de pompe centrifuge, comprenant les étapes suivantes consistant à :
- générer un code (8), lisible par voie optoélectronique, par une unité (5) de l'agencement de pompe centrifuge,
- afficher le code (8) sur un affichage (7) de l'agencement de pompe centrifuge,
- détecter par voie optique le code affiché (8) à l'aide d'un appareil mobile (9),
- transmettre sans fil les données du code (8) de l'appareil mobile (9) à un récepteur (10).

2. Procédé selon la revendication 1, **caractérisé en ce que** l'unité (5) génère un code bidimensionnel (8).

3. Procédé selon la revendication 1 ou 2, **caractérisé en ce que** l'unité (5) génère un code matriciel.

4. Procédé selon l'une quelconque des revendications 1, 2 et 3, **caractérisé en ce que** le code (8) présente des repères concernant son orientation dans l'espace.

5. Procédé selon l'une quelconque des revendications 1 à 4, **caractérisé en ce que** le code (8) présente des données concernant des messages d'erreur de l'agencement de pompe centrifuge.

6. Procédé selon l'une quelconque des revendications 1 à 5, **caractérisé en ce que** le code (8) présente des données concernant l'emplacement de l'agencement de pompe centrifuge.

7. Procédé selon l'une quelconque des revendications 1 à 6, **caractérisé en ce que** le code (8) présente des données caractéristiques de l'agencement de pompe centrifuge.

8. Procédé selon l'une quelconque des revendications 1 à 7, **caractérisé en ce que** l'appareil mobile (9) et/ou le récepteur (10) communiquent avec un réseau d'ordinateurs.

9. Procédé selon l'une quelconque des revendications 1 à 8, **caractérisé en ce que** l'unité (5) génère un code (8) variable en fonction de paramètres de l'agencement de pompe centrifuge.

10. Agencement de pompe centrifuge permettant d'exécuter un procédé selon l'une quelconque des revendications 1 à 9, comprenant des capteurs (6) et/ou des actionneurs qui communiquent avec une unité (5), l'agencement de pompe centrifuge présentant un affichage (7) qui affiche des données de l'unité (5), **caractérisé en ce que** l'unité (5) est aménagée pour générer des données de l'agencement de pompe centrifuge sous forme de code (8) lisible par voie optoélectronique à afficher sur l'affichage (7).
